Europäisches Patentamt

European Patent Office

Office européen des brevets

(11) Veröffentlichungsnummer: **0 338 451**
**A2**

## (12) EUROPÄISCHE PATENTANMELDUNG

(21) Anmeldenummer: 89106728.2

(22) Anmeldetag: 14.04.89

(51) Int. Cl.⁴: **B01D 53/34**

(30) Priorität: 21.04.88 DE 3813365

(43) Veröffentlichungstag der Anmeldung:
25.10.89 Patentblatt 89/43

(84) Benannte Vertragsstaaten:
**AT BE CH DE ES FR GB GR IT LI LU NL SE**

(71) Anmelder: **BMD GARANT ENTSTAUBUNGSTECHNIK GmbH**
**Industriestrasse 9**
**D-7632 Friesenheim(DE)**

(72) Erfinder: **Nalaskowski, Detlef, Ing.grad.,**
**Schlossblick 12,**
**D-7601 Ortenberg(DE)**

(74) Vertreter: **Dr.-Ing. Hans Lichti Dipl.-Ing. Heiner Lichti Dipl.-Phys. Dr. Jost Lempert**
**Postfach 41 07 60 Durlacher Strasse 31**
**D-7500 Karlsruhe 41(DE)**

(54) **Verfahren und Anlage zur Reinigung der Abgase aus Aluminium-Schmelzprozessen.**

(57) Abgase aus Aluminium-Schmelzprozessen mit einer Schmelzphase und einer Chlorierungsphase, in der Chlorgas in die Schmelze eingeblasen wird, werden dadurch gereinigt, daß die heißen Abgase gekühlt, anschließend in einem Hauptabgaskreis in einem Reaktor mit Kalkhydrat-Staub neutralisiert und daraufhin über Filter zum Abtrennen der festen Bestandteile geleitet werden. Zur Reduzierung des Kalkhydrat-Bedarfs und des Anfalls an nicht deponiefähigen Feststoffen ist vorgesehen, daß die heißen Abgase aus der Chlorierungsphase unmittelbar in einen Bypass-Kreis und über wenigstens eine Waschstufe geleitet werden, in welcher Chlor und Chloridreste aus dem Abgas ausgewaschen werden, und daß das gereinigte Abgas in den Hauptabgaskreis zurückgeführt wird, während das saure Ablaufwasser der Waschstufe chemisch neutralisiert und das neutralisierte Wasser durch Einleiten in den Hauptabgaskreis vor dem Reaktor verdampft wird, wobei die entstehenden Feststoffe an den Filtern aus dem Abgas abgetrennt werden.

## Verfahren und Anlage zur Reinigung der Abgase aus Aluminium-Schmelzprozessen

Die Erfindung betrifft ein Verfahren zur Reinigung der Abgase aus Aluminium-Schmelzprozessen mit einer Schmelzphase und einer Chlorierungsphase, in der Chlorgas in die Schmelze eingeblasen wird, indem die heißen Abgase zunächst auf eine Temperatur unterhalb 550 Grad Celsius heruntergekühlt, anschließend in einem Hauptabgaskreis in einem Reaktor mit Kalkhydrat-Staub zur Neutralisierung der sauren Abgaskomponenten versetzt und schließlich über Filter zum Abtrennen der festen Bestandteile einschließlich des $CaCl_2$-Staubs geleitet werden. Ferner ist die Erfindung auf eine Vorrichtung zur Durchführung des Verfahrens gerichtet.

Beim Aluminium-Schmelzprozeß, insbesondere bei der Aluminium-Schrottschmelze fallen neben den üblichen Abgasen $N_2$, $O_2$, $SO_2$ und $SO_3$ Halogene und Halogenverbindungen an. Diese resultieren aus Abdecksalzen, die auf die Schmelze aufge worfen werden, vor allem aber aus einer an den üblichen Schmelzzyklus anschließenden Chlorierungsphase, in der für eine Dauer von ca. 15 bis 20 Min. Chlorgas mit bis zu 20 kg/h in die Schmelze eingeblasen wird. Die Reinigung der Abgase erfolgt bisher im Trockenverfahren, indem die Abgase sowohl aus dem Hauptschmelzprozeß, als auch aus der Chlorierungsphase zunächst auf eine Temperatur unterhalb von 550 Grad Celsius heruntergekühlt werden. Anschließend wird in die Abgasleitung Kalkhydrat-Staub eingeblasen, der zur Neutralisierung der sauren Bestandteile bzw. der Chloridreste im Abgas führen soll. Das Abgas wird dann im allgemeinen weiter heruntergekühlt und anschließend über Filter geführt, mittels der die entstandenen Salzstäube und sonstigen Feststoffe aus dem Abgas abgetrennt werden. Auf den Filterflächen erfolgen chemische Nachreaktionen, aufgrund der die sauren Bestandteile aus dem Abgas weitgehend eliminiert werden können. Der in den Hauptabgaskreis eingeblasene Kalk erfüllt dabei nicht nur die Aufgabe der chemischen Neutralisation der sauren Bestandteile, sondern schützt durch Ablagerung auch die Anlageteile vor Korrosion.

Bei diesem bekannten Verfahren muß mit einem zwei- bis dreifach überstöchiometrischen Verhältnis an Kalk gefahren werden, um eine ausreichende Neutralisation der Schadstoffe zu erreichen. Dies erfordert einen überhöhten Kalkbedarf und führt zu einem hohen Anfall an Altkalk im zurückgehaltenen Staub. Ferner enthält der Staub aggressive Reste, die ihn nicht deponiefähig machen.

Der Erfindung liegt die Aufgabe zugrunde, ein Verfahren der eingangs genannten Art dahingehend weiterzuentwickeln, daß der Bedarf an Kalkhydrat und der Anfall an Altkalk vermindert und im übrigen ein deponiefähiger Filterrückstand erhalten wird. Ferner liegt der Erfindung die Aufgabe zugrunde, eine zur Durchführung eines solchen Verfahrens geeignete Anlage vorzuschlagen.

In verfahrenstechnischer Hinsicht wird die Aufgabe dadurch gelöst, daß die heißen Abgase aus der Chlorierungsphase unmittelbar in einen Bypass-Kreis und über wenigstens eine Waschstufe geleitet werden, in welcher Chlor und Chloridreste aus dem Abgas ausgewaschen werden, und daß das gereinigte Abgas in den Hauptabgaskreis zurückgeführt wird, während das saure Ablaufwasser der Waschstufe chemisch neutralisiert und das neutralisierte Wasser durch Einleiten in den Hauptabgaskreis vor dem Reaktor verdampft wird, wobei die entstehenden Feststoffe an den Filtern aus dem Abgas abgetrennt werden.

Durch das erfindungsgemäße Verfahren wird die Reinigung der Abgase aus der Schmelzphase und aus der Chlorierungsphase voneinander getrennt, wobei die Abgase aus der Hauptschmelzphase im üblichen Trockenverfahren, die Abgase aus der Chlorierungsphase in einem Naßverfahren behandelt werden. Im Naßverfahren werden die Halogene und Halogenverbindungen mittels Wasser ausgewaschen und das saure Ablaufwasser anschließend neutralisiert. Da die Halogene und Halogenverbindungen in gelöster Form vorliegen, kann die Neutralisierung durch stöchiometrischen oder leicht überstöchiometrischen Zusatz an Neutralisationsmittel erfolgen, so daß die Neutralisationsmittel nur in minimaler Menge eingesetzt werden müssen. Die bei diesem Naßverfahren anfallenden Komponenten, nämlich das zumindest vorgereinigte Abgas einerseits und das neutralisierte Ablaufwasser andererseits werden wieder in den Hauptabgaskreis eingeleitet, so daß keine zusätzlichen Aufbereitungsstufen notwendig sind. Dabei läßt sich das neutralisierte Ablaufwasser durch die hohe Temperatur im Hauptabgaskreis problemlos verdampfen, so daß die zuvor gelösten Bestandteile als Salze in Staubform anfallen und - wie die sonstigen Feststoffkomponenten des Abgases - an den Filtern zurückgehalten werden können. Vorteilhafterweise werden die Abgase über zwei hintereinander geschaltete Waschstufen geleitet.

In bevorzugter Ausführung ist vorgesehen, daß das saure Ablaufwasser der Waschstufe(n) im Bypass-Kreis im Kreislauf geführt, eine Teilmenge zum Neutralisieren abgezweigt und diese Teilmenge durch Frischwasser ergänzt wird.

Mit dieser Ausführungsform ist es möglich, den Bypass-Kreis kontinuierlich auch während der Schmelzphase zu betreiben, so daß ein aufwendiges Zu- und Abschalten des Bypass-Kreises nur während der Chlorierungsphase entfällt. Im übrigen wird eine stets gleichbleibende Belastung der Anlagenteile und im Bypass-Kreis ein annähernd gleichbleibender Bedarf an Neutralisationsmittel und Frischwasser erreicht.

Bei stärkeren Halogenkonzentrationen im Abgas wird vorzugsweise so vorgegangen, daß das saure Ablaufwasser nur der zweiten Waschstufe im Kreislauf geführt und das Ablaufwasser der ersten Waschstufe unmittelbar zum Neutralisieren abgezweigt wird, wobei ferner vorgesehen sein kann, daß das neutralisierte Wasser teilweise im Kreislauf über die erste Waschstufe geführt wird.

Eine weitere vorteilhafte Abwandlung des erfindungsgemäßen Verfahrens zeichnet sich dadurch aus, daß das Abgas zwischen der ersten und der zweiten Waschstufe durch eine Sprühstufe geleitet wird, die von dem im Kreislauf geführten sauren oder neutralisierten Ablaufwasser versorgt wird.

Wenngleich zur Neutralisation im Bypass-Kreis verschiedene Chemikalien eingesetzt werden können, ist vorzugsweise vorgesehen, daß das saure Ablaufwasser des Wäschers mit Kalkhydrat-Staub zu Kalkmilch neutralisiert wird.

Mit dieser Ausführungsform wird im Bypass-Kreis das gleiche Neutralisationsmittel wie im Hauptabgaskreis eingesetzt, so daß auch die Anzahl und Art der entstehenden Salze im Filterrückstand überschaubar bleibt.

Das Verdampfen des neutralisierten Ablaufwassers im Bypass-Kreis kann in einfacher Weise durch Eindüsen des Wassers in den Hauptabgaskreis erreicht werden.

In weiterhin vorteilhafter Ausgestaltung sieht das erfindungsgemäße Verfahren vor, daß die Abgase aus dem Bypass-Kreis vor dem Reaktor in den Hauptabgaskreis eingeleitet werden.

Die Abgase aus dem Bypass-Kreis weisen aufgrund des Waschprozesses eine Temperatur von unter 70 Grad Celsius auf. Sie besitzen ferner einen erhöhten Feuchtegehalt. Diese Tatsache führt aufgrund des kontinuierlichen Betriebs des Bypass-Kreises zu einer entsprechend kontinuierlichen Abkühlung der Abgase im Hauptabgaskreis. Der erhöhte Feuchtegehalt der rückgeführten Abgase aus dem Naßverfahren wirkt sich günstig bei der Neutralisation der im Abgas des Hauptabgaskreises enthaltenen Schadstoffe im Reaktor aus.

Zur weiteren Unterstützung des kontinuierlichen Betriebs ist es zweckmäßig, wenn auch während der Schmelzphase ein Teil der heißen Abgase in den Bypass-Kreis abgezweigt wird, so daß einerseits der Gasdurchsatz im Bypass-Kreis während der Schmelzphase und der Chlorierungsphase etwa gleich bleibt. Ferner wird dadurch ein stets gleichbleibender Teil an heruntergekühltem und angefeuchtetem Abgas in den Hauptabgaskreis eingespeist.

Während in den Bypass-Kreis als Neutralisationsmittel vorzugsweise reines Kalkhydrat eingespeist wird, um stöchiometrisch oder leicht überstöchiometrisch arbeiten zu können, kann dem Reaktor im Hauptabgaskreis neben reinem Kalkhydrat-Staub auch ein Teil des im Hauptabgaskreis anfallenden Altkalks zugeführt werden, um einerseits alle reaktionsfähigen Anteile im Altkalk auszunutzen, andererseits den Anfall an Altkalk zu minimieren.

Zur Durchführung des Verfahrens geht die Erfindung von einer bekannten Anlage aus, die aus einem an die Schmelz-und Warmhalteöfen eines Aluminium-Schmelzbetriebs angeschlossenen Hauptabgaskreis mit einem Reaktor, nachgeschalteten Kühlern und diesen nachgeschalteten Filtern sowie einem Kalkhydrat-Kreis mit Frischkalk-Silos und Fördereinrichtungen zum Zuführen des Frischkalks in den Reaktor und einem Altkalkkreis mit Fördereinrichtungen zum Abziehen des Altkalks aus den Kühlern und Filtern des Hauptabgaskreises und zum Einspeichern des Altkalks in Silos besteht. Eine solche Anlage zeichnet sich erfindungsgemäß dadurch aus, daß dem Hauptabgaskreis ein die Abgase aus der Chlorierungsphase des Schmelzprozesses aufnehmender Bypass-Kreis mit einem Venturi-Wäscher, einem nachgeschalteten Füllkörperwäscher und einem Neutralisationsbehälter für zumindest einen Teil des sauren Ablaufwassers der Wäscher zugeordnet ist, und daß der Neutralisationsbehälter mit einem Verdampfer im Hauptabgaskreis verbunden ist.

In dem Venturi-Wäscher wird das heiße Abgas auf ca. 70 Grad Celsius abgekühlt und dabei feuchtigkeitsgesättigt. Das gesättigte Abgas wird dann in einen Füllkörperwäscher eingesprüht und intensiv mit Wasser in Kontakt gebracht, so daß Chlor und alle Chloridverbindungen vom Wasser gelöst und ausgewaschen werden. Das gereinigte Abgas gelangt aus dem Füllkörperwäscher wieder in den Hauptabgaskreis, während das Ablaufwasser aus dem Wäscher in dem Neutralisationsbehälter unter Zugabe vorzugsweise von Kalkhydrat zu Kalkmilch neutralisiert und anschließend in den Verdampfer im Hauptabgaskreis eingeleitet wird.

In bevorzugter Ausführungsform ist vorgesehen, daß zwischen dem Füllkörperwäscher und dem Neutralisationsbehälter ein das saure Ablaufwasser zumindest dieses Wäschers aufnehmender Kreislaufbehälter angeordnet ist, und daß dieser und/oder der Neutralisationsbehälter über Rückführleitungen mit dem Venturi-Wäscher und/oder dem Füllkörperwäscher und der Kreislaufbehälter über einen Ablauf mit dem Neutralisationsbehälter verbunden ist.

Diese Ausführungsform der Anlage ermöglicht einen kontinuierlichen Betrieb des Bypass-Kreises auch während der Schmelzphase, in der das Abgas im Hauptabgaskreis gereinigt wird. Dabei fällt am Neutralisationsbehälter eine stets gleichbleibende Menge an neutralisiertem Ablaufwasser an, das während der Chlorierungs- und der Schmelzphase stetig in den Hauptabgaskreis eingedüst und verdampft wird.

In einer weiteren Ausgestaltung kann zwischen dem Venturi-Wäscher und dem Füllkörperwäscher noch ein Sprühturm angeordnet sein, der mit saurem oder neutralisiertem Kreislaufwasser beaufschlagt ist.

Eine weitere vorteilhafte Ausführungsform für hohe Halogenkonzentrationen zeichnet sich dadurch aus, daß der Füllkörperwäscher ablaufseitig mit dem Kreislaufbehälter und der Venturi-Wäscher und der Sprühturm ablaufseitig mit dem Neutralisationsbehälter verbunden sind, wobei vorzugsweise weiterhin vorgesehen ist, daß der Kreislaufbehälter ablaufseitig über eine Rückführleitung mit dem Füllkörperwäscher und der Neutralisationsbehälter ablaufseitig über Rückführleitungen mit dem Venturi-Wäscher und dem Sprühturm verbunden ist.

Wird zur Neutralisation des Ablaufwassers im Bypass-Kreis Kalkhydrat verwendet, so ist der Neutralisationsbehälter mit den Frischkalk-Silos über Fördereinrichtungen verbunden, mittels der Kalkhydrat in dosierter Menge dem Neutralisationsbehälter zugeführt wird.

Der Verdampfer ist vorzugsweise von in den Hauptabgaskreis mündenden Düsen am Ende einer an den Neutralisationsbehälter angeschlossenen und vor dem Reaktor in den Hauptabgaskreis einmündenden Förderleitung gebildet.

Um während der Schmelzphase die Kühlleistung im Bypass-Kreis auszunutzen, ist ferner vorgesehen, daß der Hauptabgaskreis vor dem Verdampfer über eine Zweigleitung mit dem Bypass-Kreis vor dem Venturi-Wäscher verbunden ist.

Diese Ausführungsform gibt die Möglichkeit, während der Schmelzphase ein Teil des anfallenden Abgases im Bypass-Kreis herunterzukühlen, anzufeuchten und wieder in den Hauptabgaskreis zurückzuführen. Entspricht diese Teilmenge des Abgases etwa der Menge des Abgases in der Chlorierungsphase, so wird eine stets gleichbleibende Teilmenge des Abgases in der Naßstufe heruntergekühlt und angefeuchtet. Damit lassen sich die Kühler im Hauptabgaskreis während der Schmelz- und der Chlorierungsphase mit konstanter Leistung betreiben.

Zweckmäßigerweise sind die Altkalk-Silos über Fördereinrichtungen mit dem Reaktor verbunden, so daß neben Kalkhydrat auch stets eine Teilmenge des Altkalks in den Hauptabgaskreis zurückgeführt und noch reaktionsfähige Bestandteile im Altkalk genutzt werden können.

Schließlich ist es zweckmäßig, wenn der Füllkörperwäscher abgasseitig mit einer zwischen dem Verdampfer und dem Reaktor in den Hauptabgaskreis mündenden Leitung mit diesem verbunden ist, so daß die Verdampfung des neutralisierten Ablaufwassers im Heißteil des Hauptabgaskreises erfolgen kann.

Nachstehend ist die Erfindung anhand von in der Zeichnung gezeigten Ausführungsformen einer Anlage erläutert. In der Zeichnung zeigen:

Figur 1 ein Fließbild der gesamten Anlage mit einer ersten Ausführung des Bypass-Kreises und

Figur 2 ein Fließbild einer zweiten Ausführung des Bypass-Kreises.

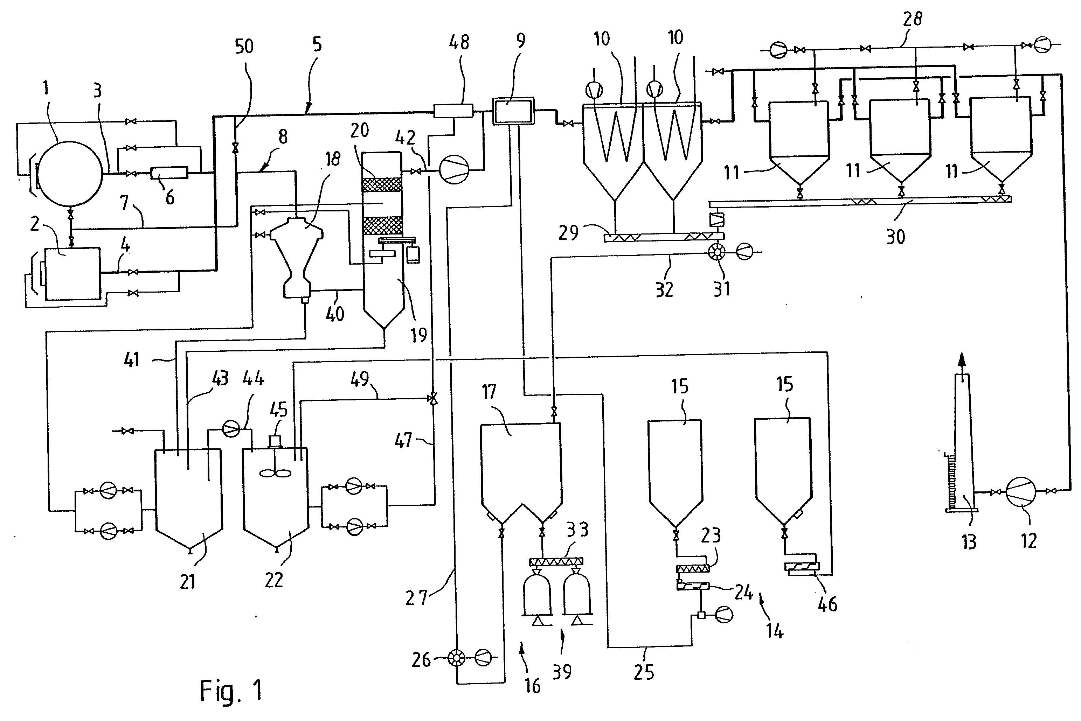

In Figur 1 ist ein Ausschnitt aus dem Schmelzbetrieb einer Aluminium-Gießerei wiedergegeben, der einen Schmelzofen 1 und einen Warmhalteofen 2 umfaßt. Üblicherweise sind mehrere solcher Öfen parallel zueinander angeordnet. Der Schmelzofen 1 und der Warmhalteofen 2 sind abgasseitig über Leitungen 3, 4 an einen Hauptabgaskreis 5 angeschlossen, wobei dem Schmelzofen ein Rekuperator 6 nachgeschaltet ist. Ferner sind beide Öfen über eine Leitung 7 an einen Bypass-Kreis 8 angeschlossen.

Im Hauptabgaskreis 5 liegen hintereinander ein Reaktor 9, Kühler 10 und Filter 11, die reingasseitig an ein Gebläse 12 angeschlossen sind, das die gereinigten Abgase an einen Kamin 13 abgibt.

Neben dem Hauptabgaskreis 5 und dem Bypass-Kreis 8 sind ein Kalkhydrat-Kreis 14 mit Silos 15 und ein Altkalkkreis 16 mit Silo 17 vorgesehen.

Der Bypass-Kreis 8 besteht aus einem Venturi-Wäscher 18 und einem nachgeschalteten Sprühturm 19 mit Füllkörperwäscher 20 sowie einem Kreislaufbehälter 21 und einem Neutralisationsbehälter 22.

Nachfolgend ist die Anlage anhand ihrer Funktionsweise beschrieben:

Während der Schmelzphase werden die Abgase aus dem Schmelzofen 1 und dem Warmhalteofen 2 über die Leitungen 3 und 4 in den Hauptabgaskreis 5 gesaugt, dort durch Zugabe von Luft auf unter 550 Grad Celsius heruntergekühlt und anschließend dem Reaktor 9 zugeführt. In den Reaktor 9 wird Kalkhydrat aus einem Silo 15 zugeführt, das aus dem Silo mittels Förderschnecke 23 abgezogen und über eine Dosiereinrichtung 24 in eine pneumatische Druckförderleitung 25 eingespeist wird, die in den Reaktor 9 mündet. Innerhalb des Reaktors und in den nachfolgenden Anlageteilen werden die sauren Bestandteile des Abgases durch den Kalkhydrat-Staub neutralisiert. In den Reaktor 9 kann ferner aus dem Silo 17 Altkalk über eine Dosierschleuse 26 und eine pneumatische Druckförderleitung 27 eingespeist werden.

Das Abgas gelangt hinter dem Reaktor in die Kühler 10, wobei deren Kühlleistung und damit die Abgastemperatur auf das Material der nachgeschalteten Filter 11 abgestellt ist. Werden in den Filtern 11 beispielsweise Filterschläuche aus Polyäthylen- oder Polyamidgewebe eingesetzt, so wird das Abgas in den Kühlern 10 auf ca. 130 Grad Celsius heruntergekühlt. Die Filter 11 sind parallel in den Hauptabgaskreis eingeschaltet, so daß sie wechselweise in Betrieb genommen werden können. Zur Abreinigung dient eine Gegenblasanlage 28, die wahlweise auf einen der nicht in Betrieb befindlichen Filter 11 aufgeschaltet wird.

Der an den Kühlern 10 anfallende und an den Filtern 11 zurückgehaltene Staub wird über Förderschnecken 29 bzw. 30 abgezogen und über eine Zellenradschleuse 31 und eine pneumatische Druckförderleitung 32 in das Altkalk-Silo 17 eingespeichert. Soweit der Altkalk nicht im Kreislauf dem Reaktor zugeführt wird, wird er über eine Förderschnecke 33 abgezogen und einer Absackanlage 39 zugeführt.

Während der Chlorierungsphase sind die in den Hauptabgaskreis 5 führenden Leitungen 3 und 4 abgeschlossen, so daß die Abgase aus dem Schmelzofen 1 und dem Warmhalteofen 2 über die Leitung 7 in den Bypass-Kreis 8 gelangen. Sie werden dort zunächst in den Venturi-Wäscher 18 eingeleitet, in den ferner Kreislaufwasser aus dem Kreislaufbehälter 21 eingespeist wird. Das feuchtigkeitsgesättigte Abgas gelangt aus dem Venturi-Wäscher 18 über die Leitung 40 in den Sprühturm 19, während das saure Überschußwasser über die Leitung 41 in den Kreislaufbehälter 21 zurückgeführt wird. Das in den Sprühturm 19 gelangende Abgas durchströmt zunächst ein wiederum mit dem Kreislaufwasser aus dem Kreislaufbehälter 21 erzeugtes Sprühfeld, anschließend den Füllkörperwäscher 20, der gleichfalls mit Kreislaufwasser beaufschlagt ist und wird schließlich über die Leitung 42 aus dem Wäscher 20 abgesaugt und in den Hauptabgaskreis 5 vor dem Reaktor 9 eingeleitet. Das im Sprühturm 19 und im Wäscher 20 anfallende saure Ablaufwasser gelangt über die Leitung 43 in den Kreislaufbehälter 21. Aus dem Kreislaufbehälter 21 wird ständig eine gleichbleibende Teilmenge des sauren Ablaufwassers aus dem Venturi-Wäscher 18 und dem Sprühturm 19 mit dem Wäscher 20 über eine Leitung 44 abgezogen und in den Neutralisationsbehälter 22 gepumpt. Der Neutrali sationsbehälter 22 ist mit einem Rührer 45 ausgestattet und wird aus dem Frischkalk-Silo 15 über eine Dosiereinrichtung 46 mit Kalkhydrat in stöchiometrischer Menge versorgt. Aus dem Neutralisationsbehälter gelangt die Kalkmilch über eine Leitung 47 in den Hauptabgaskreis 5 und wird dort bei 48 beispielsweise durch Eindüsen verdampft.

Das saure Ablaufwasser in dem Neutralisationsbehälter 22 kann über die Leitung 49 im Kreislauf gepumpt werden, um den pH-Wert auf den gewünschten Betrag einzuregeln.

Während der Schmelzphase kann eine Teilmenge des über die Leitungen 3 und 4 in den Hauptabgaskreis 5 gelangenden Abgases über eine Abzweigleitung 50 in den Bypass-Kreis 8 eingeleitet werden, um dort im Venturi-Wäscher 18, Sprühturm 19 und Wäscher 20 heruntergekühlt und angefeuchtet und schließlich über die Leitung 42 wieder in den Hauptabgaskreis 5 eingespeist zu werden. Es bleibt also der Bypass-Kreis 8 auch während der Schmelzphase in der beschriebenen Weise ständig in Betrieb.

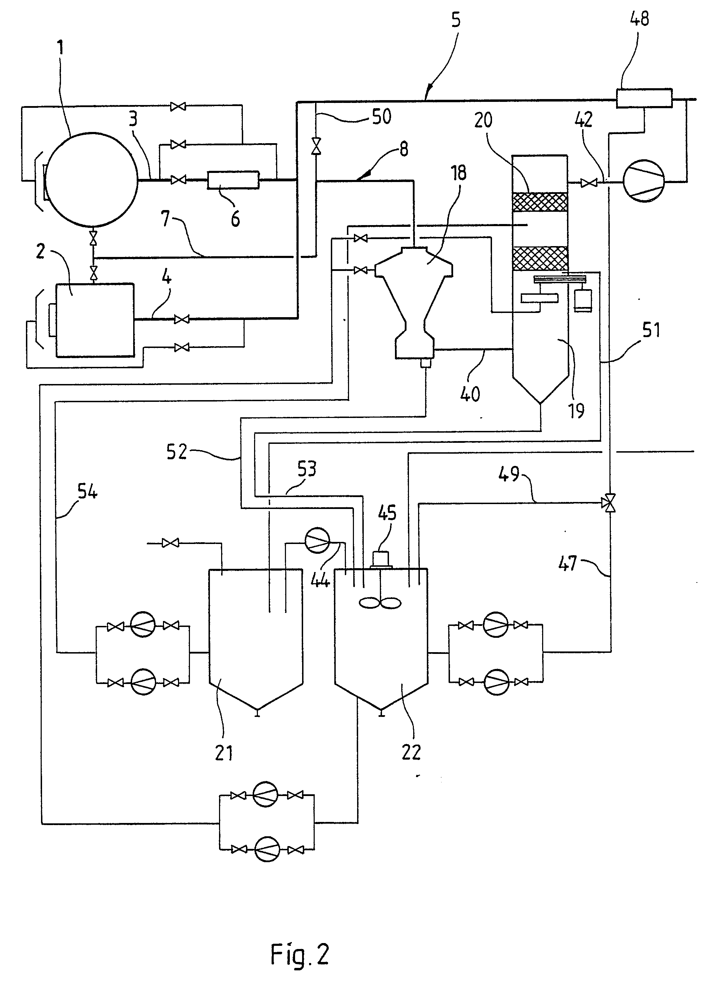

Bei der Ausführungsform gemäß Figur 2, die nur den linken Teil der Anlage gemäß Figur 1 zeigt, sind der Füllkörperwäscher 20 und der Sprühturm 19 wasserseitig getrennt. Nur Ablaufwasser des Füllkörperwäschers 20 gelangt über eine Ablaufleitung 51 in den Kreislaufbehälter 21, während das Ablaufwasser des Venturi-Wäschers 18 und des Sprühturms 19 über die Ablaufleitungen 52 und 53 unmittelbar in den Neutralisationsbehälter geleitet werden. Aus dem Kreislaufbehälter 21 wird ein Teil des Ablaufwassers aus dem Füllkörperwäscher über eine Rückführleitung 54 diesem wieder zugeführt. Auch das neutralisierte Wasser im Behälter 22 wird teilweise im Kreislauf geführt, indem der Neutralisationsbehälter über eine Rückführleitung 55 sowohl mit dem Zulauf am Venturi-Wäscher als auch mit dem Sprühturm 19 bzw. dem dort angeordneten Sprühaggregat verbunden ist, so daß diesen beiden Waschstufen neutralisierte Kalkmilch zugeführt wird.

## Ansprüche

1. Verfahren zur Reinigung der Abgase aus Aluminium-Schmelzprozessen mit einer Schmelzphase und einer Chlorierungsphase, in der Chlorgas in die Schmelze eingeblasen wird, indem die heißen Abgase zunächst auf eine Temperatur unterhalb 550 Grad Celsius heruntergekühlt, anschließend in einem Hauptabgaskreis in einem Reaktor mit Kalkhydrat-Staub zur Neutralisierung der sauren Abgaskomponenten versetzt und schließlich über Filter zum Abtrennen der festen Bestandteile einschließlich des CaCl$_2$- Staubs geleitet werden, dadurch gekennzeichnet, daß die heißen Abgase aus der Chlorierungsphase unmittelbar in einen Bypass-Kreis und über wenigstens eine Waschstufe geleitet werden, in welcher Chlor und Chloridreste aus dem Abgas ausgewaschen werden, und daß das gereinigte Abgas in den Hauptabgaskreis zurückgeführt wird, während das saure Ablaufwasser der Waschstufe chemisch neutralisiert und das neutralisierte Wasser durch Einleiten in den Hauptabgaskreis vor dem Reaktor verdampft wird, wobei die entstehenden Feststoffe an den Filtern aus dem Abgas abgetrennt werden.

2. Verfahren nach Anspruch 1, dadurch gekennzeichnet, daß die heißen Abgase aus der Chlorierungsphase über zwei hintereinander geschaltete Waschstufen geleitet werden.

3. Verfahren nach Anspruch 1, dadurch gekennzeichnet, daß das saure Ablaufwasser der Waschstufe(n) im Bypass-Kreis im Kreislauf geführt, eine Teilmenge zum Neutralisieren abgezweigt und diese Teilmenge durch Frischwasser ergänzt wird.

4. Verfahren nach einem der Ansprüche 1 bis 3, dadurch gekennzeichnet, daß das saure Ablaufwasser nur der zweiten Waschstufe im Kreislauf geführt und das Ablaufwasser der ersten Waschstufe unmittelbar zum Neutralisieren abgezweigt wird.

5. Verfahren nach einem der Ansprüche 1 bis 4, dadurch gekennzeichnet, daß das neutralisierte Wasser teilweise im Kreislauf über die erste Waschstufe geführt wird.

6. Verfahren nach einem der Ansprüche 1 bis 5, dadurch gekennzeichnet, daß das Abgas zwischen der ersten und der zweiten Waschstufe durch eine Sprühstufe geleitet wird, die von dem im Kreislauf geführten sauren oder neutralisierten Ablaufwasser versorgt wird.

7. Verfahren nach einem der Ansprüche 1 bis 6, dadurch gekennzeichnet, daß das saure Ablaufwasser des Wäschers mit Kalkhydrat-Staub zu Kalkmilch neutralisiert wird.

8. Verfahren nach einem der Ansprüche 1 bis 7, dadurch gekennzeichnet, daß die Kalkmilch zum Zwecke des Verdampfens in den Hauptabgaskreis eingedüst wird.

9. Verfahren nach einem der Ansprüche 1 bis 8, dadurch gekennzeichnet, daß die Abgase aus dem Bypass-Kreis vor dem Reaktor in den Hauptabgaskreis eingeleitet werden.

10. Verfahren nach einem der Ansprüche 1 bis 9, dadurch gekennzeichnet, daß während der Schmelzphase ein Teil der heißen Abgase in den Bypass-Kreis abgezweigt wird.

11. Verfahren nach einem der Ansprüche 1 bis 10, dadurch gekennzeichnet, daß dem Reaktor neben Kalkhydrat-Staub ein Teil des im Hauptabgaskreis anfallenden Altkalks zugeführt wird.

12. Anlage zur Durchführung des Verfahrens nach einem der Ansprüche 1 bis 11, bestehend aus einem an die Schmelz- und Warmhalteöfen eines Aluminium-Schmelzbetriebs angeschlossenen Hauptabgaskreis mit einem Reaktor, nachgeschalteten Kühlern und diesen nachgeschalteten Filtern sowie einem Kalkhydrat-Kreis mit Frischkalk-Silos und Fördereinrichtungen zum Zuführen des Frischkalks in den Reaktor und einem Altkalkkreis mit Fördereinrichtungen zum Abziehen des Altkalks aus den Kühlern und Filtern des Hauptabgaskreises und zum Einspeichern des Altkalks in Silos, dadurch gekenn zeichnet, daß dem Hauptabgaskreis (5) ein die Abgase aus der Chlorierungsphase des Schmelzprozesses aufnehmender Bypass-Kreis (8) mit einem Venturi-Wäscher (18), einem nachgeschalteten Füllkörperwäscher (20) und einem Neutralisationsbehälter (22) für zumindest einen Teil des sauren Ablaufwassers der Wäscher (18, 20) zugeordnet ist, und daß der Neutralisationsbehälter (22) mit einem Verdampfer (48) im Hauptabgaskreis (5) verbunden ist.

13. Anlage nach Anspruch 12, dadurch gekennzeichnet, daß zwischen dem Füllkörperwäscher (20) und dem Neutralisationsbehälter (22) ein das saure Ablaufwasser zumindest dieses Wäschers aufnehmender Kreislaufbehälter (21) angeordnet ist, und daß dieser und/oder der Neutralisationsbehälter (22) über Rückführleitungen mit dem Venturi-Wäscher (18) und/oder dem Füllkörperwäscher (20) und der Kreislaufbehälter (21) über einen Ablauf (44) mit dem Neutralisationsbehälter (22) verbunden ist.

14. Anlage nach Anspruch 12 oder 13, dadurch gekennzeichnet, daß zwischen dem Venturi-Wäscher (18) und dem Füllkörperwäscher (20) ein Sprühturm angeordnet ist.

15. Anlage nach einem der Ansprüche 12 bis 13, dadurch gekennzeichnet, daß der Füllkörperwäscher (20) ablaufseitig mit dem Kreislaufbehälter und der Venturi-Wäscher (18) und der Sprühturm (19) ablaufseitig mit dem Neutralisationsbehälter (22) verbunden sind.

16. Anlage nach einem der Ansprüche 12 bis 14, dadurch gekennzeichnet, daß der Kreislaufbehälter (21) ablaufseitig über eine Rückführleitung mit dem Füll körperwäscher (20) und der Neutralisationsbehälter (22) ablaufseitig über Rückführleitungen mit dem Venturi-Wäscher (18) und dem Sprühturm (19) verbunden ist.

17. Anlage nach einem der Ansprüche 1 bis 16, dadurch gekennzeichnet, daß der Neutralisationsbehälter (22) über Fördereinrichtungen (46) mit den Frischkalk-Silos verbunden ist.

18. Anlage nach einem der Ansprüche 12 bis 17, dadurch gekennzeichnet, daß der Verdampfer (48) von in den Hauptabgaskreis (5) mündenden Düsen am Ende einer an den Neutralisationsbehälter (22) angeschlossenen und vor dem Reaktor (9) in den Hauptabgaskreis (5) einmündenden Förderleitung (47) gebildet ist.

19. Anlage nach einem der Ansprüche 12 bis 18, dadurch gekennzeichnet, daß der Hauptabgaskreis (5) vor dem Verdampfer (48) über eine Zweigleitung (50) mit dem Bypass-Kreis (8) vor dem Venturi-Wäscher (18) verbunden ist.

20. Anlage nach einem der Ansprüche 12 bis 19, dadurch gekennzeichnet, daß der Füllkörperwäscher (20) abgasseitig über eine zwischen dem Verdampfer (48) und dem Reaktor (9) in den Hauptabgaskreis (5) mündenden Leitung (42) mit diesem verbunden ist.

21. Anlage nach einem der Ansprüche 12 bis 20, dadurch gekennzeichnet, daß die Altkalk-Silos (17) über Fördereinrichtungen (26, 27) mit dem Reaktor (9) verbunden sind.

Fig. 1

EP 0 338 451 A2

Fig. 2